(19) Europäisches Patentamt
European Patent Office
Office européen des brevets

(11) **EP 4 415 195 A1**

(12) **EUROPÄISCHE PATENTANMELDUNG**

(43) Veröffentlichungstag:
**14.08.2024 Patentblatt 2024/33**

(21) Anmeldenummer: **23156131.7**

(22) Anmeldetag: **10.02.2023**

(51) Internationale Patentklassifikation (IPC):
**H02H 3/44** (2006.01)

(52) Gemeinsame Patentklassifikation (CPC):
**H02H 1/043;** H02H 3/34; H02H 3/44; H02H 7/0455

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft 80333 München (DE)**

(72) Erfinder:
• **Kerger, Torsten
  14621 Schönwalde-Glien (DE)**
• **Matussek, Robert
  10365 Berlin (DE)**
• **Mieske, Frank
  13053 Berlin (DE)**

(74) Vertreter: **Siemens Patent Attorneys
  Postfach 22 16 34
  80506 München (DE)**

(54) **VERFAHREN UND ANORDNUNG ZUM ERZEUGEN EINES FEHLERSIGNALS**

(57) Um ein Verfahren zum Erzeugen eines Fehlersignals (F), das einen Fehler in einer Energieübertragungsanlage (11) anzeigt, zu schaffen, bei dem an wenigstens einer vorgegebenen Messstelle ein Leiterstrom (I1, I2, I3, I4) in jeder Phase X einer mehrphasigen Leitung gemessen und numerisch eine erste Ableitung eines jeden Leiterstroms (I1, I2, I3, I4) oder eines aus mehreren Leiterströmen ermittelten Stroms ($i_{Diff\_x}$) gebildet wird, mit Hilfe von Prüfkriterien geprüft wird, ob in der Energieübertragungsanlage (11) ein Einschaltvorgang durchgeführt wird, und das Erzeugen des Fehlersignals (F) blockiert wird, solange der Einschaltvorgang anhält, wobei ein erstes Prüfungskriterium erfüllt ist, wenn alle ersten Ableitungen gleichzeitig für ein vorgegebenes Mindestzeitintervall pro Periodendauer des Stromes gleichzeitig einen vorgegebenen ersten Schwellenwert unterschreiten, bei dem Einschaltvorgänge besonders zuverlässig erkannt werden, wird vorgeschlagen, dass bei Erfüllung des ersten Prüfkriteriums die Steigung jeder numerischen ersten Ableitung im Bereich eines Vorzeichenwechsels der jeweiligen ersten Ableitung ermittelt wird, wobei ein zweites Prüfkriterium erfüllt ist, wenn die Steigung der ersten Ableitung einen zweiten Schwellenwert unterschreitet, und wobei das Erzeugen des Fehlersignals blockiert wird, wenn das erste und das zweite Prüfkriterium erfüllt sind .

FIG 6

EP 4 415 195 A1

**Beschreibung**

Die Erfindung betrifft Verfahren zum Erzeugen eines Fehlersignals, das einen Fehler in einer Energieübertragungsanlage anzeigt, bei dem an wenigstens einer vorgegebenen Messstelle ein Leiterstrom in jeder Phase einer mehrphasigen Leitung gemessen und numerisch eine erste Ableitung eines jeden Leiterstroms oder eines aus mehreren Leiterströmen ermittelten Stroms gebildet wird, mit Hilfe von Prüfkriterien geprüft wird, ob in der Energieübertragungsanlage ein Einschaltvorgang durchgeführt wird, und das Erzeugen des Fehlersignals blockiert wird, solange der Einschaltvorgang anhält, wobei ein erstes Prüfungskriterium erfüllt ist, wenn alle ersten Ableitungen gleichzeitig für ein vorgegebenes Mindestzeitintervall pro Periodendauer des Stromes gleichzeitig einen vorgegebenen ersten Schwellenwert unterschreiten.

Ein solches Verfahren wird auch als Kurvenverlaufsprüfung und im Englischen als "Current-Wave-Analysis" CWA-Verfahren bezeichnet. Verfahren dieser Art werden bereits von kommerziell erhältlichen Differentialschutzgeräten durchgeführt. Solche Schutzgeräte dienen dazu, im Falle eines Fehlers in einer Energieübertragungsanlage ein Fehlersignal zu erzeugen, das den jeweiligen Fehler anzeigt. Bei Einschaltvorgängen innerhalb der Energieübertragungsanlage können bekanntermaßen jedoch Stromspitzen und Stromverläufe auftreten, die im Normalbetrieb der Energieübertragungsanlage sonst für einen Fehler typisch sind, also auf einen Fehler innerhalb der Energieübertragungsanlage hindeuten. Aus diesem Grunde prüfen vorbekannte Schutzgeräte außerdem, ob in der Energieübertragungsanlage ein Einschaltvorgang durchgeführt wird, und blockieren das Erzeugen des Fehlersignals, solange der jeweilige Einschaltvorgang anhält. Durch das Blockieren des Fehlersignals während eines Einschaltvorgangs wird verhindert, dass Schutzalgorithmen des Schutzgeräts, während eines Einschaltvorgangs ansprechen und ein Fehlersignal auslösen, obwohl tatsächlich gar kein Fehler vorliegt, sondern ein normaler Einschaltvorgang stattfindet. Ein solches Verfahren ist beispielsweise aus der Patentschrift EP 2 329 574 B1 bekannt.

Besonders sind kritisch sind Einschaltfälle an einem Transformator bei Vorliegen oder Entstehen eines internen Transformatorfehlers. Durch die Überlagerung von Einschaltstrom und Fehlerstrom wird ein sicheres Zusatzkriterium zur Diskriminierung zwischen Erkennung von Einschaltvorgängen und internen Fehler benötigt

Der Erfindung liegt die Aufgabe zugrunde, ein Verfahren der eingangs genannten Art anzugeben, bei dem Einschaltvorgänge besonders zuverlässig erkannt werden und das Blockieren eines Fehlersignals demgemäß ebenfalls besonders zuverlässig erfolgt.

Diese Aufgabe wird erfindungsgemäß dadurch gelöst, dass bei Erfüllung des ersten Prüfkriteriums die Steigung jeder numerischen ersten Ableitung im Bereich eines Vorzeichenwechsels der jeweiligen ersten Ableitung ermittelt wird, wobei ein zweites Prüfkriterium erfüllt ist, wenn die Steigung der ersten Ableitung einen zweiten Schwellenwert unterschreitet, und wobei das Erzeugen des Fehlersignals blockiert wird, wenn das erste und das zweite Prüfkriterium erfüllt sind.

Danach ist erfindungsgemäß vorgesehen, dass zuerst festgestellt wird, ob der Strom einer Energieübertragungsanlage für ein vorgegebenes Mindestzeitintervall pro Periodendauer des Stromes einen flachen Stromverlauf aufweist, also die numerisch gebildete erste Ableitung eines jedes Leiterstroms kleiner ist als ein erster Schwellenwert. Im Rahmen der Erfindung wird anschließend geprüft, ob ein zweites Prüfkriterium erfüllt ist. Dazu wird in dem Bereich, in dem die bereits ermittelte erste Ableitung ihr Vorzeichen wechselt also mit anderen Worten im Bereich eines Nulldurchgangs, basierend auf den berechneten Wertepaaren der besagten ersten Ableitung die Steigung der ersten Ableitung ermittelt. Dies kann im Rahmen der Erfindung beispielsweise durch die numerische Berechnung der zweiten Ableitung in diesem Bereich erfolgen. Hierzu wird zweckmäßigerweise der Differenzenquotient der ersten Ableitung auf bekannte Art und Weise gebildet. Diese Steigung wird mit einem zweiten Schwellenwert vergleichen. Das zweite Prüfkriterium ist erfüllt, wenn die so ermittelte Steigung der ersten Ableitung im Bereich des ihres Nulldurchgangs kleiner ist als der besagte zweite Schwellenwert.

Ein wesentlicher Vorteil des erfindungsgemäßen Verfahrens ist darin zu sehen, dass Einschaltvorgänge von tatsächlichen inneren Fehlern innerhalb der Energieübertragungsanlage mit dem erfindungsgemäßen Verfahren noch sicherer unterschieden werden können.

Bei dem im Hinblick auf seinen Stromverlauf zu überprüfenden Strom kann es sich beispielsweise um einen Differentialstrom in einem Differentialschutzrelais, oder einen oder mehrere Leiterströme der Energieübertragungsanlage handeln.

Aus mehreren beispielsweise zwei Leiterströmen, die an unterschiedlichen Messstellen für die gleiche Phase erfasst wurden, kann im Rahmen der Erfindung auch ein Strom berechnet und die numerische erste Ableitung aus diesem Strom gebildet werden. Dies gilt dann für alle Phasen des Leiters. Als Beispiel sei ein Differentialstrom genannt.

Das Grundprinzip des auch im Rahmen der Erfindung angewandten CWA-Verfahrens basiert auf der Auswertung der Kurvenform der Momentan- oder Stromabtastwerte $i(n)$ aller drei Phasen eines in einer Energieübertragungsanlage fließenden Stromes. Zur numerischen Ableitung der gemessenen Leiterströme $I_x$ in den jeweiligen Phasen x wird der Differenzenquotienten wie folgt gebildet:

$$i'_x(n) = scale_d \quad (i_x(n) - i_x(n-1)) \tag{1}$$

Hierbei ist n ein fortlaufender Index, der einem Abtastwert im Zeitpunkt n entspricht. Es wird auch auf die weiter unten stehenden Erläuterungen hierzu verwiesen. $Scale_d$ entspricht einem Faktor.

Vorteilhafterweise wird die Steigung jeder ersten Ableitung im Bereich des Vorzeichenwechsels der besagten ersten Ableitung durch Anpassung einer Geraden an eine vorbestimmte Anzahl von numerisch ermittelten Werten der ersten Ableitung mit Hilfe der kleinsten Fehlerquadrate ermittelt. Der Bereich des Vorzeichenwechsels oder Nulldurchgangs der Ableitungsfunktion ist durch einen hohen Anstieg charakterisiert. Dieser Anstieg ist mathematisch die Ableitung zweiter Ordnung der Originalfunktion. Der gemessene Leiterstrom entspricht hierbei der numerisch ermittelten Originalfunktion. Die Messwerte des Leiterstromes also die Stromabtastwerte $i_x(n)$ sind durch Stromwandlung, Eingangshardware und Analog/Digitalwandlung mit Messfehlern oder Ungenauigkeiten behaftet. Eine nochmalige Differenzierung durch die Bildung der zweiten Ableitung würde diese Fehler verstärken. Deshalb wird im Bereich der Vorzeichenwechsels eine lineare Regression des Anstiegs b der Geradengleichung f(x) = a + bx durchgeführt. Diese lineare Regression erfolgt mit Hilfe der Fehlerquadratmethode nach C.F. Gauss.

Basierend auf der Methode der kleinsten Quadrate ergibt sich der Anstieg b mit der Methode der kleinsten Quadrate zu:

$$b = \frac{\sum x_n y_n - \frac{\sum x_n \sum y_n}{N}}{\sum x_n^2 - \frac{\sum x_n \sum x_n}{N}} \tag{2}$$

Hierbei ist $y_n$ der Wert der ersten Ableitung an dem Abtastzeitpunkt $x_n$. Es wird hier ein Teilabschnitt mit insgesamt N Abtastzeitpunkten betrachtet, wobei n ganzzahlig ist und einen fortlaufenden Index von n= 1 bis n=N innerhalb des Teilabschnitts darstellt. Die ohne Begrenzungen dargestellten Summenzeichen stellen mit anderen Worten Summen über den Index n dar, wobei n eine zwischen n=1 und n=N fortlaufende ganze Zahl ist.

Der Anstieg b wird bei einer weiteren Variante der Erfindung vereinfacht nach der folgenden Gleichung mit den Faktoren $k_0$ und $k_1$ berechnet.

$$k_0 = \frac{\sum x_n}{N} \qquad\qquad \frac{1}{k_1} = \sum x_n^2 - \frac{\sum x_n \sum x_n}{N}$$

$$b = k_0 \left( \sum x_n y_n - k_1 \sum y_n \right) \tag{3}$$

Es ergibt sich für N = 6 folgende Gleichung zur Berechnung von b:

$$b = 0.05714285 \left( \sum x_n y_n - 3.5 \sum y_n \right)$$

Aus Gründen der Übersicht wurde unterhalb der Summenzeichen der Term n=1 und oberhalb der Summenzeichen N weggelassen. Es sei daher der Vollständigkeit darauf hingewiesen, dass von n=1 bis n=N aufsummiert werden soll.

Bei einer vorteilhaften Variante der Erfindung liegt die vorbestimmte Anzahl zwischen 4 und 10. Es hat sich im Rahmen der Erfindung herausgestellt, dass sich bei dieser Anzahl an Wertepaaren bei der linearen Regression die zuverlässigsten Ergebnisse bei überschaubaren Rechenaufwand einstellen. Insbesondere ist es in diesem Sinne vorteilhaft, wenn N=4 oder N=6 ist.

Vorteilhafterweise wird die numerische erste Ableitung mit Hilfe eines Faktors $scale_d$ skaliert, der mit Hilfe der folgenden Formel

$$scale_d = \frac{1}{\sqrt{2 + 2\cos\dfrac{2\pi f}{f_A}}} \qquad (4)$$

berechnet wird, wobei f die Netzfrequenz und $f_A$ die Abtastrate sind.

Auf diese Weise kann der Anstieg k der ersten Ableitung k mit der ersten Ableitung selbst verglichen werden.

Vorteilhafterweise sind der erste und zweite Schwellenwert variabel und werden in Abhängigkeit von zumindest einem an der Energieübertragungsanlage gemessenen Messwert ermittelt. Beispielsweise können der erste Stromschwellenwert in Abhängigkeit von zumindest einem gemessenen Bezugsstrommesswert festgelegt werden. Vorzugsweise werden der ersten Stromschwellenwert umso größer gewählt, je größer der Bezugsstrommesswert ist. Zum Beispiel wird als erster Stromschwellenwert ein zu dem Bezugsstrommesswert proportionaler Wert gewählt.

Als der Bezugsstrommesswert kann beispielsweise der maximale Stromwert gewählt werden, der in einem zeitlich vorher liegenden Bezugszeitintervall gemessen worden ist.

Im Falle einer mehrphasigen Energieübertragungsanlage wird es als vorteilhaft angesehen, wenn pro Phase jeweils ein phasenleiterindividueller erster Stromschwellenwert bestimmt und angewandt wird, wobei jeder der phasenleiterindividuellen Stromschwellenwerte vorzugsweise jeweils in Abhängigkeit von einem Bezugsstrommesswert der jeweiligen Phase bestimmt wird. Der Bezugstrommesswert ist beispielsweise der Grundschwingungseffektivwert.

Abweichend davon ist es im Rahmen der Erfindung möglich, dass der erste und der zweite Schwellenwert fest vorgegeben sind. Dabei werden die Schwellenwerte beispielsweise empirisch ermittelt.

Vorteilhafterweise wird der erste Schwellenwert $C_X$ mit Hilfe des Grundschwingungseffektivwertes $I_{FundX}$ und der zweiten Harmonischen $I_{2.HrmX}$ gebildet gemäß

$$C_X = (I_{FundX} + I_{2.HrmX}) FactCWA . \qquad (5)$$

Die Erfindung bezieht sich darüber hinaus auf ein Feldgerät, insbesondere Schutzgerät, das ein besonders gutes Schutzverhalten auch während eines Einschaltvorgangs aufweist.

Erfindungsgemäß ist diesbezüglich vorgesehen, dass das Feldgerät eine Auswerteeinrichtung aufweist, die geeignet ist, ein Verfahren, wie es oben im Detail beschrieben ist, auszuführen.

Bezüglich der Vorteile des erfindungsgemäßen Feldgerätes sei auf die obigen Ausführungen im Zusammenhang mit dem erfindungsgemäßen Verfahren verwiesen. Vorteilhafte Ausgestaltungen des erfindungsgemäßen Feldgerätes sind in Unteransprüchen angegeben.

Die Erfindung wird nachfolgend anhand von Ausführungsbeispielen näher erläutert, dabei zeigen

Figur 1    eine Anordnung mit einem Ausführungsbeispiel für ein erfindungsgemäßes Feldgerät,

Figur 2    fünf übereinander angeordnete Diagramme, von denen das oberste Diagramm die gemessenen Phasenströme der in Figur 1 verdeutlichten Phasenleiter L1, L2, L3 bei Zuschalten eines Transformators, die drei darunter liegenden Diagramme die numerisch berechneten ersten Ableitungen in den drei Phase mit den jeweiligen ersten Schwellenwerten und das unterste Diagramm einen einfachen Zähler C darstellen,

Figur 3    vier übereinander angeordnete Diagramme, von denen das oberste Diagramm die gemessen Kurvenform eines Kurzschlussstromes in den drei Phasenleitern L1, L2 und L3 gemäß Figur 1 und die drei darunter liegenden Diagramme die numerisch berechnete erste Ableitung in jeweils einer der Phasen darstellen, wobei der Kurzschlussstrom die Folge eines zweipoligen-Transformatorfehlers mit einer Gleichstromverlagerung ist,

Figur 4    gemessene Momentanwerte und die numerisch ermittelte erste Ableitung eines sinusförmigen Kurzschlussstroms mit einem hohen Gleichstromanteil und die Steigung $k=\Delta Y/\Delta X$ der ersten Ableitung dargestellt und das Schwellenkriterium $C_A$,

Figur 5    ein Diagramm zur Verdeutlichung der linearen Regression zur Ermittlung der Steigung der ersten Ableitung bei einem Nulldurchgang darstellt und

Figur 6    die Momentanwerte und die numerisch ermittelte erste Ableitung gemäß Figur 4 einschließlich der gemäß Figur 5 ermittelten Steigung der ersten Ableitung k mit den zugehörigen ersten $C_X$ und zweiten Schwellenwerten $C_{DX}$.

In den Figuren werden der Übersicht halber für identische oder vergleichbare Komponenten stets dieselben Bezugszeichen verwendet.

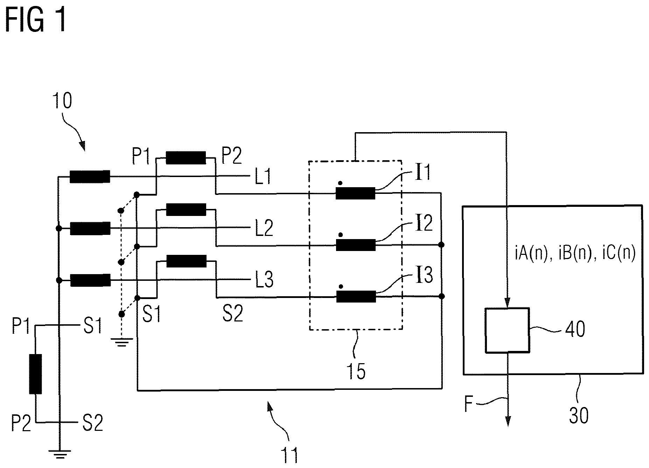

In der Figur 1 erkennt man einen Abschnitt 10 einer nicht weiter dargestellten Energieübertragungsanlage 11. Der Abschnitt 10 kann beispielsweise einen Transformator aufweisen.

An einer Messstelle 15 des Abschnitts 10 ist an drei Phasenleiter L1, L2 und L3 des Transformators ein Feldgerät 30 angeschlossen. Das Feldgerät 30 ist mit einer Auswerteinrichtung 40 ausgestattet, zu der die Leiterströme I1, I2 und I3 beschreibende Strommessgrößen oder mit andern Worten Momentanwerte, bei denen es sich beispielsweise um Strommesswerte wie Stromabtastwerte $i_A(n)$, $i_B(n)$ und $i_c(n)$ handeln kann, übertragen werden. Die Auswerteinrichtung 40 wertet die Stromabtastwerte $i_A(n)$, $i_B(n)$ und $i_c(n)$ aus und erzeugt ein Fehlersignal F, wenn ein Fehler in der Energieübertragungsanlage 11 feststellbar ist.

Die Auswerteinrichtung 40 des Feldgerätes 30 prüft außerdem, ob ein Einschaltvorgang erkennbar ist. Im Falle eines erkannten Einschaltvorganges wird das Erzeugen des Fehlersignals F blockiert, um ein fehlerhaftes Auslösen des Feldgerätes 30 zu vermeiden.

Die Auswerteinrichtung 40 gemäß Figur 1 führt an Hand der Stromabtastwerte $i_A(n)$, $i_B(n)$ und $i_c(n)$ eine Kurvenverlaufsprüfung 50 durch. Im Rahmen der Kurverlaufsprüfung 50 wird geprüft, ob die numerische erste Ableitung der durch die Stromabtastwerte $i_A(n)$, $i_B(n)$ und $i_c(n)$ beschriebenen Leiterströme in der Energieübertragungsanlage 11 gemäß Figur 1 einen kleiner ist als ein erste Schwellenwert. Dies erfolgt gemäß folgender Gleichung (1):

$$|i_A(n) - i_A(n-1)| \leq C_x \text{ und}$$
$$|i_B(n) - i_B(n-1)| \leq C_x \text{ und} \qquad (6a)$$
$$|i_C(n) - i_C(n-1)| \leq C_x$$

wobei $C_X$ dem erstem Schwellenwert, die tiefer gestellten Indizes A, B und C die Phasenleiter und die Indizes (n) bzw. (n-1) zeitlich aufeinander folgende Abtastwerte kennzeichnen.

Im Falle einer Anwendung des erfindungsgemäßen Verfahrens zum Schutz eines Transformators werden für jede Phase X Differentialströme $i_{Diff\_X}$ aus der Differenz von betragskorregierten und schaltgruppenkorregierten Leiterströmen $i_{XS1}$, $i_{XS2}$ gebildet, die an unterschiedlichen Messstellen S1 und S2, beispielsweise an den beiden Transformatorseiten, für jede Phase X erfasst wurden. Bildet man den Betrag dieser Differenz erhält man betragskorrigierte Momentanwerte der beiden Transformatorseiten.

$$I_{Diff\_A} = i_{AS1} - i_{AS2}, \qquad i_{Diff\_B} = i_{BS1} - i_{BS2}, \qquad i_{Diff\_C} = i_{CS1} - i_{CS2}$$

Die Schaltgruppenkorrektur bildet die magnetische Verkopplung der Transformatorspulen nach und macht die an beiden Transformatorseiten gemessenen Leiterströme somit miteinander vergleichbar. Dazu werden die gemessenen Ströme mit Matrizen umgerechnet, die für den jeweiligen Schaltgruppentyp hinterlegt sind. Die Schaltgruppenkorrektur ist dem Fachmann jedoch bekannt, so dass an dieser Stelle hierauf nicht weiter eingegangen wird.

Damit ergibt sich (6b) für ein Differentialschutzgerät zu:

$$\left|i_{DIFF\_A}(n) - i_{DIFF\_A}(n-1)\right| \leq C_x \text{ und}$$
$$\left|i_{DIFF\_B}(n) - i_{DIFF\_B}(n-1)\right| \leq C_x \text{ und} \qquad (6b)$$
$$\left|i_{DIFF\_C}(n) - i_{DIFF\_C}(n-1)\right| \leq C_x$$

Alternativ kann die Prüfung, ob das erste Prüfungskriterium erfüllt ist, auch gemäß einer der beiden folgenden Gleichungen (7) oder (8) erfolgen:

$$\frac{|\Delta i_A(n)|}{Ts} \leq C_x \quad \& \quad \frac{|\Delta i_B(n)|}{Ts} \leq C_x \quad \& \quad \frac{|\Delta i_C(n)|}{Ts} \leq C_x$$
$$(7)$$

$$di_A(n) \leq C_x \quad \& \quad di_B(n) \leq C_x \quad \& \quad di_{1C}(n) \leq C_x \qquad (8)$$

wobei "&" eine logische UND-Verknüpfung, $C_X$ der vorgegebene erste Schwellenwert und Ts die Abtastzeit bzw. das Abtastintervall beschreiben.

Der erste Schwellenwerte $C_X$ könnte beispielsweise in Abhängigkeit von dem Nennstrom $I_N$ der Energieübertragungsanlage gemäß Figur 1 ermittelt werden. Beispielsweise kann gelten:

$$C_X = 0,025 * I_N \qquad (9)$$

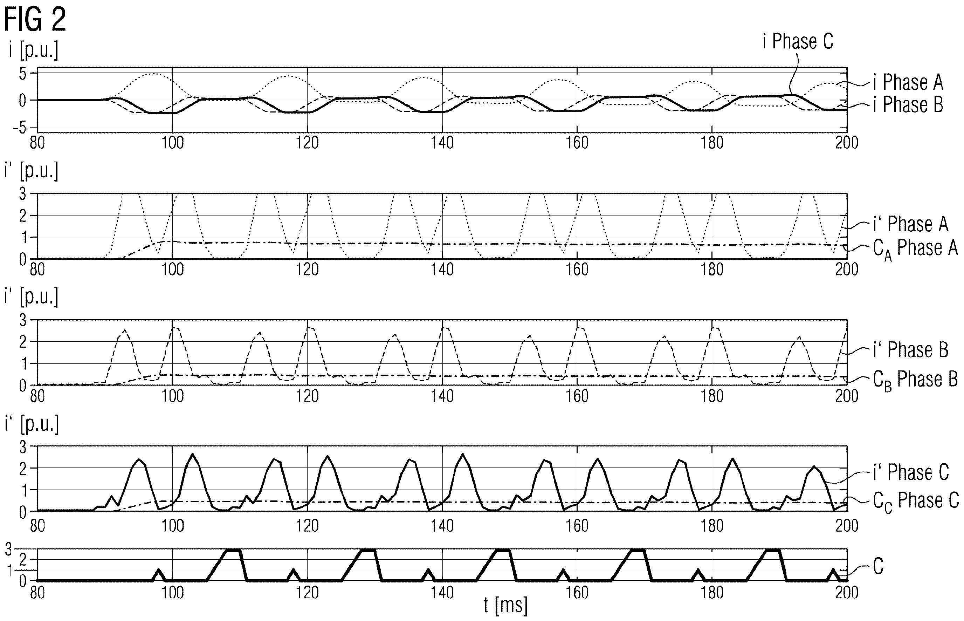

Figur 2 zeigt in dem oberen Diagramm drei Phasenströme der Phasen a, b und c, die bei einem Zuschalten eines Transformators in eine Energieübertragungsanlage an der besagten Messstelle erfasst wurde. In den drei darunterliegenden Diagrammen sind die numerisch ermittelten ersten Ableitungen i' oder mit anderen Worten die Differenzenquotienten dif der im oberen Diagramm gezeigten Stromverläufe abgebildet. Im unteren Diagramm ist der Verlauf eines Zählwerts C dargestellt, wobei gezählt wird wie oft die Differenzenquotienten der Abtastwerte in allen drei Phasen unterhalb der Ansprechschwelle, also kleiner sind als der erste Schwellenwert der in den mittleren Figuren als $C_A$, $C_B$ und $C_C$ strichpunktiert dargestellt ist.

Es ist erkennbar, dass in der nach 100 ms folgenden Netzperiode von 20 ms Dauer immer drei Abtastwerte der ersten numerischen Ableitung immer unterhalb des ersten Schwellenwerts liegen. Vorbekannte Verfahren hätten somit an dieser Stelle bereits auf ein Zuschaltereignis entschieden und das Bilden eines Fehlersignals blockiert.

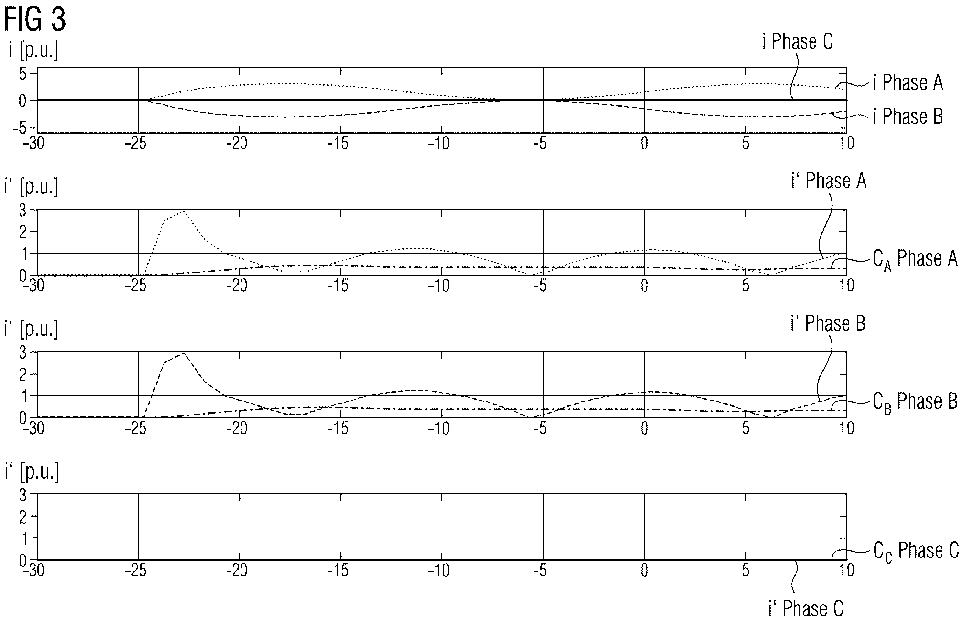

Figur 3 zeigt die Kurvenform der Abtastwerte als internen zweipoligen Transformatorfehlers mit einer Gleichstromverlagerung in dem oberen Diagramm. In den drei darunterliegenden Diagrammen sind die dazugehörigen Differenzenquotienten oder mit anderen Worten die nummerisch ermittelten ersten Ableitungen der jeweiligen Phase gezeigt. Darüber hinaus das sind die phasenidividuellen ersten Schwellenwerte $C_A$, $C_B$, $C_C$ dargestellt. Die Leiterströme mit den Stromabtastwerten $i_X(n)$ in den Phasen A und B sind phasengleich. Nach einer viertel Periode der Netzfrequenz tritt in diesen beiden Phasen ein Maximum auf. Aufgrund der Phasengleichheit der Phasen A und B sind deren Differenzenquotienten oder ersten Ableitungen gleich und liegen darüber hinaus unterhalb des ersten Schwellenwerts $C_X$. So würde ein vorbekanntes Verfahren fälschlicherweise auf einen Einschaltvorgang oder mit anderen Worten einen sogenannten "Inrush" entscheiden und das Aussenden eines Fehlersignals würde wieder unterdrückt werden.

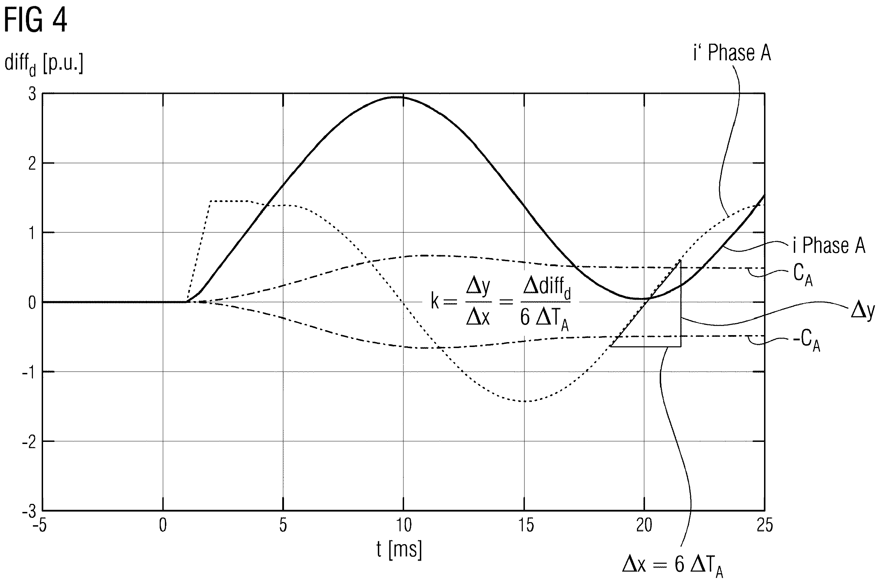

Abbildung 4 zeigt die gemessenen Momentan- oder Abtastwerte des Leiterstromes in dem Phasenleiter A und gleichzeitigen den aus diese Abtastwerten gebildeten Differenzenquotienten oder mit anderen Worten die numerisch ermittelte erste Ableitung. Der Nulldurchgang der Ableitungsfunktion ist durch einen hohen Anstieg charakterisiert. Dieser Anstieg ist mathematisch die Ableitung zweiter Ordnung der Originalfunktion. Da die Messwerte also die Abtastwerte jedoch aufgrund der Stromwandlung, der Eingangshardware und der Analog-DigitalWandlung mit Messfehlern und anderen Ungenauigkeiten behaftet sind, wurde auf eine nochmalige Differenzierung durch die Bildung der zweiten Ableitung mit Hilfe eines Differenzenquotienten der ersten Ableitung verzichtet.

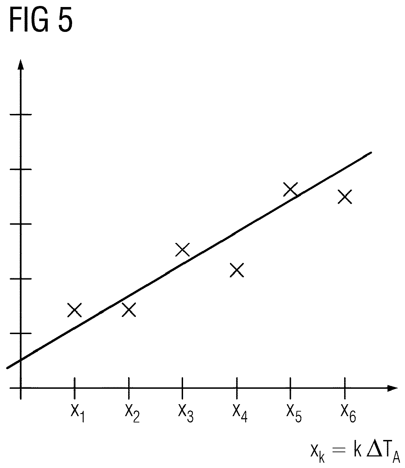

Stattdessen wird im Bereich des Nulldurchgangs oder der Vorzeichenwechsels der ersten Ableitung eine lineare Regression des Anstiegs b der Gradengleichung f(x) = bx + a durchgeführt. Figur 5 verdeutlicht, dass die Steigung b der besagten Geradengleichung mit Hilfe der linearen Regression durchgeführt wird. Die hierzu notwendigen Gleichungen sind weiter oben dargestellt.

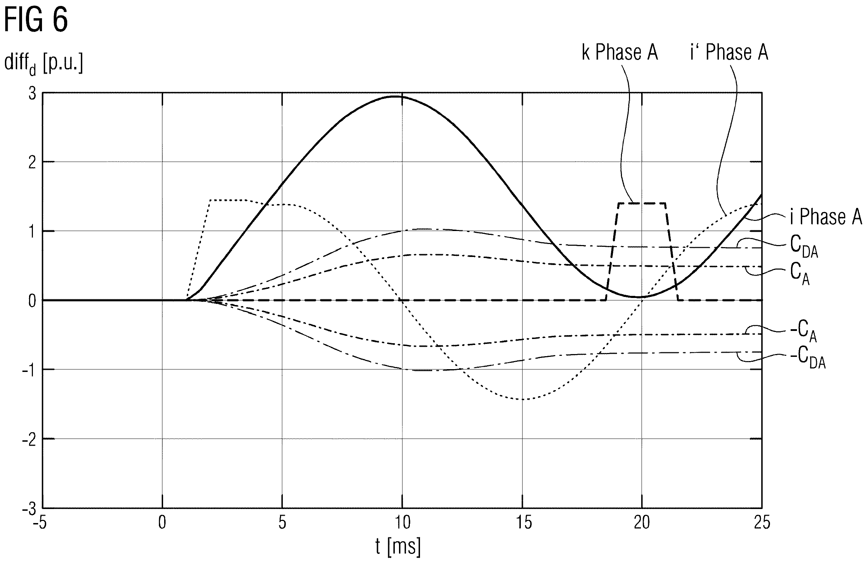

Figur 6 zeigt zusätzlich zu den bereits in Figur 4 gezeigten Funktionen den Verlauf des ersten $C_X$ und des zweiten Schwellenwertes $C_{DX}$. Darüber hinaus ist der ermittelte Anstieg b der ersten Ableitung in Figur 6 gezeigt. Es ist erkennbar, dass die hellgrüne dargestellte Funktion, also die Steigung der ersten Ableitung b über dem positiven zweiten Schwellenwert $C_{DA}$ liegt. In Figur 6 sind ein positiver zweiter Schwellenwert $C_{DA}$ und ein negativer zweiter Schwellenwert $-C_{DA}$ dargestellt. Es wird somit erkennbar, dass gemäß dem erfindungsgemäßen Verfahren das Unterdrücken des Fehlerregals verhindert wird. Vielmehr kann im Rahmen der Erfindung sicher zwischen einem Einschaltvorgang und einem Fehler in der Energieübertragungsanlage unterschieden werden.

**Patentansprüche**

1. Verfahren zum Erzeugen eines Fehlersignals (F), das einen Fehler in einer Energieübertragungsanlage (11) anzeigt, bei dem

   - an wenigstens einer vorgegebenen Messstelle ein Leiterstrom (I1, I2, I3, I4) in jeder Phase X einer mehrphasigen Leitung gemessen und numerisch eine erste Ableitung eines jeden Leiterstroms (I1, I2, I3, I4) oder aus mehreren Leitungsströmen berechneten Stroms ($i_{Diff\_X}$) gebildet wird,

- mit Hilfe von Prüfkriterien geprüft wird, ob in der Energieübertragungsanlage (11) ein Einschaltvorgang durchgeführt wird, und
- das Erzeugen des Fehlersignals (F) blockiert wird, solange der Einschaltvorgang anhält, wobei
- wobei ein erstes Prüfungskriterium erfüllt ist, wenn alle ersten Ableitungen gleichzeitig für ein vorgegebenes Mindestzeitintervall pro Periodendauer des Stromes gleichzeitig einen vorgegebenen ersten Schwellenwert unterschreiten,
**dadurch gekennzeichnet, dass**
- bei Erfüllung des ersten Prüfkriteriums die Steigung $b_X$ jeder numerischen ersten Ableitung im Bereich eines Vorzeichenwechsels der jeweiligen ersten Ableitung ermittelt wird,
- wobei eine zweites Prüfkriterium erfüllt ist, wenn alle Steigungen $b_x$ der ersten Ableitungen gleichzeitig für ein vorgegebenes Mindestzeitintervall pro Periodendauer des Stromes gleichzeitig einen vorgegebenen zweiten Schwellenwert unterschreiten, und
- das Erzeugen des Fehlersignals (F) blockiert wird, wenn das erste und das zweite Prüfkriterium erfüllt sind.

2. Verfahren nach Anspruch 1,
**dadurch gekennzeichnet, dass**
die Steigung $b_X$ jeder ersten Ableitung im Bereich des Vorzeichenwechsels der besagten ersten Ableitung durch Anpassung einer Geraden an eine vorbestimmte Anzahl von numerisch ermittelten Werten der ersten Ableitung mit Hilfe der kleinsten Fehlerquadrate ermittelt wird.

3. Verfahren nach Anspruch 2,
**dadurch gekennzeichnet, dass**
die vorbestimmte Anzahl zwischen 4 und 10 liegt.

4. Verfahren nach einem der vorangehenden Ansprüche,
**dadurch gekennzeichnet, dass**
die Steigung $b_X$ gemäß folgender Gleichung

$$b = \frac{\sum_{n=1}^{N} x_x y_n - \frac{\sum_{n=1}^{N} x_n \sum_{n=1}^{N} y_n}{N}}{\sum_{n=1}^{N} x_n^2 - \frac{\sum_{n=1}^{N} x_n \sum_{n=1}^{N} x_n}{N}}$$

berechnet wird, wobei $y_n$ der Wert der ersten Ableitung an dem Abtastzeitpunkt $x_n$ und n eine zwischen n=1 und n=N fortlaufende ganze Zahl ist.

5. Verfahren nach einem der vorangehenden Ansprüche,
**dadurch gekennzeichnet, dass**
die erste Ableitung mit Hilfe eines Faktors skaliert wird, der mit Hilfe der folgenden Formel

$$scale_d = \frac{1}{\sqrt{2 + 2\cos\frac{2\pi f}{f_A}}}$$

berechnet wird, wobei f die Netzfrequenz und $f_A$ die Abtastrate sind.

6. Verfahren nach einem der vorangehenden Ansprüche,
**dadurch gekennzeichnet, dass**
der erste $C_X$ und $C_{DX}$ zweite Schwellenwert fest vorgegebenen werden.

7. Verfahren nach einem der vorangehenden Ansprüche,
**dadurch gekennzeichnet, dass**
der erste $C_X$ und zweite Schwellenwert $C_{DX}$ variabel sind und in Abhängigkeit von zumindest einem an der Energieübertragungsanlage gemessenen Messwert ermittelt wird.

8. Verfahren nach einem der vorangehenden Ansprüche,
**dadurch gekennzeichnet, dass**
der erste $C_X$ und/oder zweite Schwellenwert $C_{DX}$ phasenspezifisch sind/ist.

9. Verfahren nach einem der vorangehenden Ansprüche,
**dadurch gekennzeichnet, dass**
der erste Schwellenwert $C_X$ mit Hilfe des Grundschwingungseffektivwertes $I_{FundX}$ und der zweiten Harmonischen $I_{2.HrmX}$ gebildet gemäß

$$C_X = (I_{FundX} + I_{2.HrmX})\, FactCWA \, .$$

10. Verfahren nach einem der vorangehenden Ansprüche,
**dadurch gekennzeichnet, dass**
der zweite Schwellenwert $C_{DX}$ empirisch ermittelt wird.

FIG 1

FIG 2

EP 4 415 195 A1

FIG 3

# FIG 4

$$k = \frac{\Delta y}{\Delta x} = \frac{\Delta \text{diff}_d}{6\,\Delta T_A}$$

$\Delta x = 6\,\Delta T_A$

i' Phase A

i Phase A

$C_A$

$\Delta y$

$-C_A$

diff$_d$ [p.u.]

t [ms]

EP 4 415 195 A1

FIG 5

$$x_k = k \, \Delta T_A$$

FIG 6

diff$_d$ [p.u.]

k Phase A    i' Phase A

i Phase A

$C_{DA}$
$C_A$

$-C_A$
$-C_{DA}$

t [ms]

Europäisches
Patentamt

European
Patent Office

Office européen
des brevets

**EUROPÄISCHER RECHERCHENBERICHT**

**Nummer der Anmeldung**

**EP 23 15 6131**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2009/073407 A1 (COOPER TECHNOLOGIES CO [US]; KOJOVIC LJUBOMIR A [US] ET AL.) 11. Juni 2009 (2009-06-11) * Zusammenfassung; Abbildungen 1, 4-5 * * Absätze [0025], [0036] - [0037] * * Absatz [0041] - Absatz [0046] * ----- | 1-10 | INV. H02H1/043 ADD. H02H3/44 |
| X | US 2015/349511 A1 (KOJOVIC LJUBOMIR A [US]) 3. Dezember 2015 (2015-12-03) * Zusammenfassung * * Abbildungen 4-6 * * Absatz [0043] - Absatz [0050] * ----- | 1-10 | |
| A,D | EP 2 329 574 B1 (SIEMENS AG [DE]) 28. Oktober 2015 (2015-10-28) * Zusammenfassung * * Absatz [0027] * * Absatz [0032] * * Absatz [0047] * ----- | 1-10 | |

**RECHERCHIERTE SACHGEBIETE (IPC)**

H02H

Der vorliegende Recherchenbericht wurde für alle Patentansprüche erstellt

| Recherchenort | Abschlußdatum der Recherche | Prüfer |
|---|---|---|
| München | 4. August 2023 | Operti, Antonio |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 6131

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-08-2023

| Im Recherchenbericht angeführtes Patentdokument | Datum der Veröffentlichung | Mitglied(er) der Patentfamilie | Datum der Veröffentlichung |
|---|---|---|---|
| WO 2009073407 A1 | 11-06-2009 | BR PI0820011 A2 | 19-05-2015 |
| | | CA 2707481 A1 | 11-06-2009 |
| | | EP 2223404 A1 | 01-09-2010 |
| | | ES 2542877 T3 | 12-08-2015 |
| | | TW 200934027 A | 01-08-2009 |
| | | US 2009147412 A1 | 11-06-2009 |
| | | WO 2009073407 A1 | 11-06-2009 |
| US 2015349511 A1 | 03-12-2015 | US 2015349511 A1 | 03-12-2015 |
| | | WO 2015187636 A2 | 10-12-2015 |
| EP 2329574 B1 | 28-10-2015 | BR PI0919375 A2 | 12-01-2016 |
| | | CN 102165663 A | 24-08-2011 |
| | | EP 2329574 A1 | 08-06-2011 |
| | | RU 2464688 C1 | 20-10-2012 |
| | | WO 2010034635 A1 | 01-04-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• EP 2329574 B1